# FASCICULE DE BREVET EUROPEEN

(11) **EP 1 837 387 B1**
(45) Date de publication et mention de la délivrance du brevet: **05.01.2011**
(21) Numéro de dépôt: 07102849.2
(22) Date de dépôt: 22.02.2007
(51) Int. Cl.: C09K 11/79, C09K 11/85

(54) **Composés phosphorescents**
Phosphoreszierende Verbindungen
Phosphorescent compounds

(30) Priorité: 13.03.2006 CH 3992006; 01.05.2006 EP 06009008
(43) Date de publication de la demande: 26.09.2007
(73) Titulaire: Association Suisse pour la Recherche Horlogère, 2002 Neuchâtel (CH)
(72) Inventeur: Kubel, Frank, 1070 Vienne (AT); Bowen, Paul, 1260 Nyon (CH)
(74) Mandataire: Ravenel, Thierry Gérard Louis

(56) Documents cités:
- GB-A- 1 284 882
- US-A1- 2002 190 645
- US-A1- 2004 155 569
- US-A1- 2006 027 781

## Description

### Domaine technique

La présente invention a pour objet des composés phosphorescents ayant pour matrice un silicate d'alcalino-terreux dopé par l'europium et co-dopé par au moins une autre terre rare sous forme de fluorures.

L'invention concerne également un procédé permettant d'effectuer la synthèse dans les meilleures conditions procurant un effet favorable sur la rémanence.

### Arrière plan technologique

Les composés phosphorescents sont des composés qui accumulent un certain "potentiel d'énergie" par illumination par la lumière naturelle, et qu'ils restituent sous forme de lumière visible lorsqu'ils sont placés dans l'obscurité, les critères déterminants étant, entre autres, la stabilité chimique, l'innocuité lors de manipulation et la rémanence, c'est-à-dire la durée pendant laquelle la lumière sera émise dans l'obscurité. On connaît déjà depuis longtemps les propriétés phosphorescentes des sulfures dopés.

On peut par exemple citer de façon non limitative Zn S : Cu émettant une lumière jaune-vert, (Ca, Sr) S : Bi émettant une lumière bleutée, ou (Zn, Cd) S: Cu émettant une lumière rouge. Ces composés phosphorescents ont toutefois été progressivement abandonnés, soit en raison de leur faible stabilité chimique, notamment à l'humidité, soit en raison de leurs performances médiocres au niveau de la rémanence et de la luminosité, voire de leur toxicité s'il comporte du cadmium. Pour cette même dernière raison des compositions à base de tritium ont également été abandonnées en raison de risques avérés, tant au niveau du fabricant que du porteur en raison de la radioactivité.

Pour pallier les inconvénients susmentionnées, de nombreux brevets proposent des composés comportant un matrice formée par un oxyde dans laquelle peuvent venir s'intercaler des atomes de terres-rares capables de passer d'un niveau d'excitation à un autre, selon qu'ils reçoivent une irradiation lumineuse ou qu'ils sont placés dans l'obscurité. On peut par exemple citer le brevet EP 0 662 440 dans lequel la matrice est un aluminate d'alcalino-terreux.

Un certain nombre d'autres brevets divulgue des matrices plus complexes dans lesquelles le silicium peut être présent. De façon non limitative on peut citer le brevet EP 0 877 070 dont la formule la plus proche de la présente invention serait mSrO.nMgO.2 Si O2: Eux, Ln_{y}, dans laquelle m et n sont non nul. Le brevet US 2004/155569 contient un composé phosphorescent, comprenant une matrice de silicate dopée par EuF₃, DyF₃, SnF₃.

A la meilleure connaissance de la demanderesse, aucun document antérieur ne divulgue une matrice de composés phosphorescents composée seulement à partir d'un silicate d'alcalino-terreux.

### Brève description de l'invention

La présente invention vise donc à procurer de nouveaux composés phosphorescents qui soient à la fois chimiquement stables, quelles que soient les conditions d'environnement, qui soient non toxiques et donc manipulables sans risques, qui offrent une palette suffisante de couleurs et qui présentent une rémanence et une intensité relativement élevée.

A cet effet l'invention a pour objet une famille de composés phosphorescents comprenant une matrice à base silicate de formule générale M₂SiO₄ dans laquelle M représente un alcalino-terreux, tel que le barium, le strontium, ou le calcium, ladite matrice étant dopée par l'europium et co-dopée par au moins un autre lanthanide (Ln) sous forme de fluorures.

Parmi les lanthanides préférés on retiendra le praséodyme, le samarium, le dysprosium et l'holmium et plus particulièrement le dysprosium lorsque l'alcaiinoterreux de la matrice hôte est le strontium. Les dopants et co-dopants peuvent être présents dans des proportions molaires comprises entre 0.1 % et 2.0% de préférence environ 0.4%.

Selon un autre aspect de l'invention, dans une première étape on calcine à haute température SiO₂ et un carbonate ou acétate d'alcalino-terreux. Les composés phosphorescents sont obtenus par un procédé dans lequel, les dopants et co-dopants sont introduits sous forme de fluorures dans cette première étape, ou dans l'étape suivante consistant à poursuivre le chauffage à température plus modérée en atmosphère réductrice composée par exemple d'un mélange N₂ / H₂.

Les composés ainsi obtenus, qui présentent les propriétés souhaitées pour des composés phosphorescents, sont ensuite traités par les procédés connus dans le domaine des poudres par broyage, par exemple par un broyeur à boules, et par tamisage pour obtenir une granulométrie dans une gamme déterminée.

Les poudres ainsi obtenues peuvent ensuite être incorporées dans différents supports, ou dans différentes compositions ou émulsions.

### Description détaillée

### Exemple 1. Composés phosphorescents à matrice silicate de barium (Ba₂SiO₄]

On mélange et broie intimement de l'acétate de barium [Ba (C₂H₃O₂)₂] et du dioxyde de silicium [SiO₂] dans un creuset en platine, en graphite, ou en alumine qu'on place dans un four tunnel dont la température est portée à 1200°C. On ajoute éventuellement du sesquioxyde de bore [B₂O₃] pour abaisser la température de la phase liquide et/ou pour introduire des lacunes nécessaires à la phosphorescence dans la structure.

On ajoute ensuite l'europium sous forme de fluorure [Eu F₃] comme dopant et le dysposium également sous forme de fluorure [Dy F₃] comme co-dopant, puis on replace le creuset dans le four à une température d'environ 900°C en maintenant une atmosphère réductrice constituée par un mélange de N₂/H₂.

L'expérience a montré que, dans cette étape du procédé, les pourcentages molaires de chaque fluorure devait se situer de préférence autour de 0.4% pour obtenir le plus fort effet phosphorescent. On a en effet constaté qu'avec une calcination à 900°C, contrairement à ce qu'on pouvait attendre, une plus grande concentration de fluorures provoquait une diminution de l'intensité.

A l'issue de cette étape, le produit obtenu est broyé, puis la poudre est calibrée par tamisage.

On a également préparé d'autres composés phosphorescents à matrice silicate de barium en utilisant comme co-dopants d'autres lanthanides tels que le praséodyme, le samarium et l'holmium, toujours sous forme de fluorures.

Le praséodyme s'est révélé être le co-dopant procurant la plus forte phosphorescence avec des pourcentages molaires respectivement de 0.40% pour Eu F₃ et 0.39% pour Pr F₃. Ce composé phosphorescent de couleur verte présente des pics à 254nm, et 366mn avec une phosphorescence et une rémanence relativement importante.

### Exemple 2. Composés phosphorescents à matrice silicate de strontium [Sr₂SiO₄]

Selon un protocole légèrement différent de celui de l'exemple 1, on a mélangé et broyé dans un creuset du carbonate de strontium [SrCo₃], du dioxyde de silicium [SiO₂], du fluorure d'europium [Eu F₃] dans une proportion molaire de 0.42% et du fluorure de dysprosium [Dy F₃] dans une proportion de 0.41%, puis calciné le mélange dans un four tunnel à 1350°C. On a ensuite placé ledit mélange en atmosphère réductrice et chauffé à 1000°C pendant 2 heures pour obtenir une matrice silicate de strontium en phase β.

La poudre obtenue après broyage et tamisage est de couleur blanche légèrement teintée de jaune, présente des pics à 254nm, et 366nm avec une importante phosphorescence sur une longue période.

D'autres composés ont été préparés en remplaçant le fluorure de dysprosium par des fluorures de samarium ou d'holmium.

### Exemple 3. Composés phosphorescents à matrice silicate de calcium [Ca₂SiO₄]

Selon un protocole comparable a celui de l'exemple 2, mais en effectuant la calcination pendant 12 heures à 1450°C dans l'air, à partir de carbonate de calcium [CaCO₃], de dioxyde de silicium [SiO₂], de fluorure d'europium [EuF₃] dans la proportion molaire de 0.42% et de fluorure d'holmium [Ho F₃] dans la proportion molaire de 0.40% on obtient une poudre jaune-vert ayant une matrice en phase y, avec des pics à 254nm et 366nm, et montrant une phosphorescence et une rémanence relativement importante.

D'autres composés ont été préparés en remplaçant le fluorure d'holmium par d'autres fluorures de lanthanides, tels que les fluorures de samarium ou de dysprosium.

Dans les exemples 1 à 3 qui viennent d'être décrits la matrice est obtenue par une réaction solide-solide. Il s'agit du mode d'obtention préféré, mais on pourrait également faire appel à d'autres méthodes, tel que le procédé sol-gel.

L'introduction des atomes de lanthanide en tant que dopants ou co-dopants sous forme de fluorures constitue le mode de synthèse préféré car il permet de créer localement un fort champ polaire.

Une fois la poudre obtenue par broyage et tamisage, elle peut être incorporée dans un produit fini ou semi-fini tel que du verre, une matière plastique etc... chaque fois qu'on aura besoin que lesdits produits soient visibles la nuit après avoir été exposés à la lumière du jour.

La poudre phosphorescente peut également être incorporée dans une composition de laque, peinture ou vernis destinée à être appliquée sur un objet particulier.

Le domaine horloger constitue un champ d'application particulièrement intéressant pour rendre visibles la nuit, sans apport d'énergie, des parties de la montre telles que le cadran et / ou les aiguilles et / ou les index horaires. Compte-tenu des petites dimensions à recouvrir, le coût relativement élevé de composés phosphorescents incorporant des terres rares n'intervient finalement que très peu dans le prix de revient de la pièce d'horlogerie.

## Revendications

1. Composé phosphorescent, comprenant une matrice à base de silicate de formule M₂SiO₄ dans laquelle M représente un alcalino-terreux tel que le barium, le strontium ou le calcium, ladite matrice étant dopée par de l'europium et co-dopée par au moins un autre lanthanide (Ln) sous forme de fluorure.

2. Composé phosphorescent selon la revendication 1, **caractérisé en ce que** le lanthanide (Ln) permettant le co-dopage de la matrice est choisi parmi le praséodyme, le samarium, le dysprosium et l'holmium, ou un mélange de ces derniers.

3. Composé phosphorescent selon les revendications 1 ou 2, répondant à la formule M₂₋ₓSiO₄ : Euₐ, Ln_{b} dans laquelle x, a et b représentent des pourcentages molaires tels que x=a+b, M et Ln ayant les significations précédemment indiquées.

4. Composé phosphorescent selon la revendication 3, **caractérisé en ce que** le pourcentage a d'europium est compris entre 0,1% et 0,5%

5. Composé phosphorescent selon une quelconque des revendications 3 ou 4, **caractérisé en ce que** le pourcentage b de l'autre lanthanide co-dopant est compris entre 0,1% et 2.0%.

6. Composé phosphorescent selon les revendications 4 et 5, **caractérisé en ce que** les valeurs de a et b sont voisines de 0.4%

7. Composé phosphorescent selon la revendication 6, **caractérisé en ce qu'**il est choisi parmi les composés à matrice Ba₂SiO₄ dopée par l'europium et co-dopée par le praséodyme, à matrice Sr₂SiO₄ dopée par l'europium et co-dopée par le dysprosium, et à matrice Ca₂SiO₄ dopée par l'europium et co-dopée par l'holmium.

8. Composé phosphorescent selon l'une quelconque des revendications précédentes, **caractérisé en ce que** le pic de luminescence après illumination est situé entre 254nm et 366nm

9. Procédé de synthèse d'un composé phosphorescent selon l'une quelconque des revendications précédentes, **caractérisé en ce qu'**il comporte les étapes consistant à:
a- broyer et mélanger des carbonates ou acétates d'alcalino-terreux et du dioxyde de silicium (SiO₂);
b- calciner le mélange à une haute température comprise entre 1100°C et 1500°C;
c- ajouter les dopants et co-dopants sous forme de fluorures, et calciner en atmosphère réductrice composée d'un mélange N₂/H₂ à une température inférieure comprise entre 900°C et 1000°C, et
d- laisser refroidir le produit obtenu à l'étape précédente, le broyer, et le calibrer par tamisage.

10. Procédé selon la revendication 89, **caractérisé en ce qu'**on ajoute dans l'étape c un fondant, tel que B₂O₃ pour abaisser la température et pour créer des lacunes dans la structure.

11. Procédé selon la revendication 89, **caractérisé en ce que**, dans les étapes a et b, on ajoute également les dopants et co-dopants.

12. Composition comprenant un composé phosphorescent selon l'une quelconque des revendications 1 à 8 destinée à être appliquée sur un support permettant de le rendre visible la nuit.

13. Pièce d'horlogerie **caractérisée en ce qu'**au moins un de ses composants incorpore une composition selon la revendication 12.

## Claims

1. Phosphorescent compound, including a silicate based matrix with a formula M₂SiO₄ wherein M represents an alkaline earth such as barium, strontium or calcium, the said matrix being doped with europium and co-doped with at least one other lanthanide (Ln) in the form of a fluoride.

2. Phosphorescent compound according to claim 1, **characterized in that** the lanthanide (Ln) for co-doping the matrix is selected from among praseodymium, samarium, dysprosium and holmium or a mixture thereof.

3. Phosphorescent compound according to claims 1 or 2, having the formula M₂₋ₓSiO_{4:}Euₐ,Ln_{b} wherein x, a and b represent molar proportions such that x=a+b, M and Ln having the meanings indicated hereinbefore.

4. Phosphorescent compound according to claim 3, **characterized in that** the percentage a, of europium is comprised between 0.1 % and 0.5%.

5. Phosphorescent compound according to any of claims 3 or 4, **characterized in that** the percentage b of the other co-dopant lanthanide is comprised between 0.1 % and 2.0%.

6. Phosphorescent compound according to claims 4 and 5, **characterized in that** the values of a and b are close to 0.4%.

7. Phosphorescent compound according to claim 6, **characterized in that** it is selected from among compounds with a Ba₂SiO₄ matrix doped with europium and co-doped with praseodymium, with a Sr₂SiO₄ matrix doped with europium and co-doped with dysprosium, and with a Ca₂SiO₄ matrix doped with europium and co-doped with holmium.

8. Phosphorescent compound according to any of the preceding claims, **characterized in that** the luminescence peak after illumination is between 254 nm and 366 nm.

9. Synthesis method for a phosphorescent compound according to any of the preceding claims, **characterized in that** it includes the steps consisting in:
a- grinding and mixing rare earth carbonates or silicates and silicon dioxide (SiO₂);
b- calcinating the mixture at a high temperature comprised between 1100°C and 1500°C;
c- adding the dopants and co-dopants in the form of fluorides, and treated in a reducing atmosphere composed of a mixture of N₂/H₂ at a lower temperature comprised between 900°C and 1000°C; and
d- leaving the product obtained at the preceding step to cool, grinding it and calibrating it by sieving.

10. Method according to claim 9, **characterized in that** in step c a flux is added, such as B₂O₃, to lower the temperature and create disconformities in the structure.

11. Method according to claim 9, **characterized in that**, in steps a and b the dopants and co-dopants are also added.

12. Composition including a phosphorescent compound according to any of claims 1 to 8 to be applied to a support in order to make the latter visible at night.

13. Timepiece **characterized in that** at least one of its components incorporates a composition according to claim 12.

## Patentansprüche

1. Phosphoreszierende Zusammensetzung, die einen Grundstoff auf Silikatbasis mit der Formel M₂SiO₄ enthält, worin M ein Erdalkali wie etwa Barium, Strontium oder Calcium repräsentiert, wobei der Grundstoff mit Europium dotiert und mit wenigstens einem anderen Lanthanid (Ln) in Fluorform codotiert ist.

2. Phosphoreszierende Zusammensetzung nach Anspruch 1, **dadurch gekennzeichnet, dass** das Lanthanid (Ln), das die Codotierung des Grundstoffs ermöglicht, aus Praseodymium, Samarium, Dysprosium und Holmium oder aus einem Gemisch dieser Letzteren gewählt ist.

3. Phosphoreszierende Zusammensetzung nach den Ansprüchen 1 oder 2, die der Formel M₂₋ₓSiO₄:Euₐ,Ln_{b} entspricht, worin x, a und b molare Prozentsätze repräsentieren, derart, dass x = a + b, wobei M und Ln die oben erwähnten Bedeutungen haben.

4. Phosphoreszierende Zusammensetzung nach Anspruch 3, **dadurch gekennzeichnet, dass** der Prozentsatz a von Europium im Bereich von 0,1 % bis 0,5 % liegt.

5. Phosphoreszierende Zusammensetzung nach einem der Ansprüche 3 oder 4, **dadurch gekennzeichnet, dass** der Prozentsatz b des anderen codotierenden Lanthanids im Bereich von 0,1 % bis 2 % liegt.

6. Phosphoreszierende Zusammensetzung nach den Ansprüchen 4 und 5, **dadurch gekennzeichnet, dass** die Werte a und b in der Umgebung von 0,4 % liegen.

7. Phosphoreszierende Zusammensetzung nach Anspruch 6, **dadurch gekennzeichnet, dass** sie aus den Zusammensetzungen mit Grundstoff Ba₂SiO₄, der mit Europium dotiert und mit Praseodymium codotiert ist, mit Grundstoff Sr₂SiO₄, der mit Europium dotiert und mit Dysprosium codotiert ist, und mit Grundstoff Ca₂SiO₄, der mit Europium dotiert und mit Holmium codotiert ist, gewählt ist.

8. Phosphoreszierende Zusammensetzung nach einem der vorhergehenden Ansprüche, **dadurch gekennzeichnet, dass** der Lumineszenz-Peak nach der Beleuchtung im Bereich von 254 nm bis 366 nm liegt.

9. Verfahren zum Synthetisieren einer phosphoreszierenden Zusammensetzung nach einem der vorhergehenden Ansprüche, **dadurch gekennzeichnet, dass** es die Schritte umfasst, die darin bestehen:
a- Erdalkali-Carbonate oder -Acetate und Siliciumdioxid (SiO₂) zu zerkleinern und zu mischen;
b- das Gemisch bei einer hohen Temperatur im Bereich von 1100 °C bis 1500 °C zu calcinieren;
c- die Dotierstoffe und Codotierstoffe in Fluorform hinzuzufügen und in reduzierender Atmosphäre, die aus einem N₂/H₂ zusammengesetzt ist, bei einer niedrigeren Temperatur im Bereich von 900 °C bis 1000 °C zu calcinieren, und
d- das im vorhergehenden Schritt erhaltene Produkt abkühlen zu lassen, es zu zerkleinern und durch Sieben zu klassieren.

10. Verfahren nach Anspruch 9, **dadurch gekennzeichnet, dass** im Schritt c ein Schmelzzuschlag wie etwa B₂O₃ hinzugefügt wird, um die Temperatur zu senken und um in der Struktur Hohlräume zu erzeugen.

11. Verfahren nach Anspruch 9, **dadurch gekennzeichnet, dass** in den Schritten a und b auch die Dotierstoffe und Codotierstoffe hinzugefügt werden.

12. Stoffzusammensetzung, die eine phosphoreszierende Zusammensetzung nach einem der Ansprüche 1 bis 8 enthält, die dazu vorgesehen ist, auf einen Träger aufgebracht zu werden, um ihn bei Nacht sichtbar machen zu können.

13. Zeitmessgerät, **dadurch gekennzeichnet, dass** wenigstens eine seiner Komponenten eine Stoffzusammensetzung nach Anspruch 12 enthält.
